# EUROPÄISCHE PATENTSCHRIFT

(11) **EP 1 849 583 B1**
(45) Veröffentlichungstag und Bekanntmachung des Hinweises auf die Patenterteilung: **06.08.2014**
(21) Anmeldenummer: 07001813.0
(22) Anmeldetag: 27.01.2007
(51) Int. Cl.: B29C 65/08, B26D 7/08

(54) **Vorrichtung zum Bearbeiten von Werkstücken mittels Ultraschall**
Device for machining workpieces using ultrasound
Dispositif destiné à usiner des pièces à l'aide d'ultrasons

(30) Priorität: 26.04.2006 DE 102006020418
(43) Veröffentlichungstag der Anmeldung: 31.10.2007
(73) Patentinhaber: Herrmann Ultraschalltechnik GmbH & Co. KG, 76307 Karlsbad-Ittersbach (DE)
(72) Erfinder: Konieczka, Mike, IL 60050 Mchenry (US)
(74) Vertreter: DREISS Patentanwälte PartG mbB

(56) Entgegenhaltungen:
- EP-A- 1 468 794
- GB-A- 2 320 906
- US-A- 3 697 357

## Beschreibung

Die Erfindung betrifft eine Vorrichtung zum Bearbeiten von Werkstücken mittels Ultraschall, mit einer Ultraschallsonotrode und einem Amboss, wobei zwischen der Ultraschallsonotrode und dem Amboss ein Werkstück bearbeitet wird.

Mit derartigen Ultraschallbearbeitungsvorrichtungen können Werkstücke gefügt oder miteinander verbunden werden. Mit derartigen Vorrichtungen können Werkstücke auch verschweißt oder getrennt, d.h. geschnitten werden. Ferner kann mit derartigen Vorrichtungen ein erstes Werkstückteil an einem zweiten Werkstückteil in einer bestimmten Lage fixiert werden. Bei der Bearbeitung von Werkstücken mittels Ultraschall besteht oftmals die Forderung, dass bestimmte Werkstückbereiche von der Ultraschalleinwirkung ausgenommen werden. Zum Beispiel müssen bestimmte einzelne Bauteile, die nicht miteinander verschweißt werden dürfen, fixiert, gehalten oder gedämpft werden. Außerdem sollten die Bauteile vor dem Bearbeiten sicher fixiert werden.

Es ist bekannt, flexible Formteile vorzusehen, die in die Sonotrodenstirnfläche eingeklebt oder an dieser festgeklemmt werden. Damit soll eine Dämpfung bestimmter Bauteilbereiche während des Bearbeitungsvorganges möglich sein. Mit solchen Dämpfungselementen ist es aber nicht möglich, eine exakte Fixierung zu erzielen. Ebenso ist die Standzeit dieser Elemente relativ gering und die Abstimmung der Andruckkraft ist durch die hohe Federkonstante beziehungsweise der geringen Federlänge derartiger Dämpfungsglieder sehr problematisch.

Zusätzlich zum Stand der Technik gemäß der DE-A-25 08 175, der DE-A-10 68 646 und der GB-A- 1 262 534 sind aus der DE-U 92 12 560 federgelagerte, voreilende Niederhalter bekannt, die außerhalb der Sonotrode gelagert und geführt werden. Das Andrücken auf das zu bearbeitende Werkstück kann dabei außerhalb der Sonotrode erfolgen oder die Niederhalter sind, wie aus der DE-U-87 02 983 bekannt, ins Innere der Sonotrode geführt. Der Nachteil derartiger Ausführungen besteht darin, dass der Aufbau relativ aufwändig ist und dass er relativ viel Platz benötigt. Ferner sind auch diese Systeme mit mechanischen Federn vorgespannt. Somit ist der Anpressdruck nicht konstant und wegabhängig.

Bei anderen Ausführungsformen ist der mittels einer Feder vorgespannte Niederhalter im Schwingungsknoten der Ultraschallsonotrode gelagert. Als problematisch hat sich bei diesen Vorrichtungen herausgestellt, dass dennoch Schwingungen übertragen werden, da eine exakte Lagerung im Schwingungsknoten nur theoretisch möglich ist, da die gesamte Verschraubung beziehungsweise Befestigung eines solchen Niederhaltersystems sich über einen größeren Bereich erstreckt, der über den Schwingungsknoten hinausgeht. Die Folgen sind eine Erwärmung, Vibrationen und eine Erhöhung der Verlustleistung des Gesamtsystems. Dies resultiert in einer verkürzten Lebensdauer und in einer eingeschränkten Zuverlässigkeit derartiger Systeme.

Aus der US 3,697,357 A ist eine Vorrichtung zum Ultraschallschweißen bekannt geworden, bei der im Amboss ein Niederhalter vorgesehen ist. Diese Lösung ist nicht optimal, das mittels des Niederhalters das Werkstück vom der Oberfläche des Ambosses abgehoben wird und dadurch ein genaues Schweißen unmöglich gemacht wird. Die GB 2,320,906 A zeigt eine Vorrichtung zum Ultraschallschweißen, bei der die Sonotrode von einem Hebelmechanismus durchgriffen wird, üben den ein Niederhalter betätigt wird. Eine derartige Vorrichtung ist für genaues Arbeiten ungeeignet und dürfte von den Ultraschallschwingungen in kürzester Zeit zerstört werden.

Aus der EP 1 468 794 A1 ist eine Stanzvorrichtung bekannt, bei dem das Stanzwerkzeug auch Ultraschallschwingungen ausführen kann. Im Stanzwerkzeug ist eine Ausstoßvorrichtung gelagert, mit der im Stanzwerkzeug festsitzende Stanzlinge ausgestoßen werden können. Niederhalter sind bei dieser Stanzvorrichtung nicht vorgesehen.

Der Erfindung liegt daher die Aufgabe zugrunde, eine Vorrichtung der eingangs genannten Art derart weiterzubilden, dass die Ultraschallsonotrode bei einfachem und kompaktem Aufbau mit einem Niederhalter oder Dämpfungselement versehen werden kann.

Diese Aufgabe wird mit einer Vorrichtung gelöst, die die Merkmale des Anspruchs 1 aufweist.

Die erfindungsgemäße Ausgestaltung sieht demnach vor, dass der Niederhalter als Stempel, Bolzen oder Stößel ausgebildet ist und dieser Stempel spielfrei oder nahezu spielfrei in der Ausnehmung der Ultraschallsonotrode geführt ist, wobei der Stempel eine Ruhelage und eine Arbeitslage einnehmen kann, indem er in der Ausnehmung verlagert wird. Die Funktion des Stempels kann also aus- und eingeschaltet werden. Bei einer Variante kann der Stempel auch innerhalb der Ultraschallsonotrode fixiert werden, so dass er einen Teil der schwingenden Ultraschallsonotrode bildet, und zur Bearbeitung des Werkstücks beiträgt.

Zusätzlich liegt der Stempel fluiddicht, insbesondere pneumatisch dicht in der Ausnehmung und kann mittels eines Fluides nach Art eines Kolbens verschoben werden. Die Ausnehmung bildet einen Druckraum und weist einen Anschluss für ein Arbeitsfluid auf. Mittels des Arbeitsfluides wird der Stempel in der Ausnehmung bewegt und es können Kräfte auf den Stempel ausgeübt werden. Dabei kann die Kraft auf den Stempel und somit die Kraft des Niederhalters beziehungsweise des Dämpfungselements exakt durch den Druck des Fluides eingestellt werden. Dabei befindet sich der Anschluss für das Arbeitsfluid in einem Schwingungsknoten.

Bei einer Weiterbildung ist vorgesehen, dass die Ausnehmung eine Bohrung, insbesondere eine Stufenbohrung, mit kreisrundem oder polygonalem Querschnitt ist. Dabei kann der Stempel auf einfache Weise als Zylinderstift ausgebildet sein. Soll der Stempel eine bestimmte Ausrichtung beibehalten, wird dieser mit einem polygonalen Querschnitt versehen, so dass er lediglich in einer Dimension, nämlich in seiner Längsrichtung verlagert werden kann. Besitzt der Zylinderstift eine Schulter, dann kann der Verfahrweg des Stempels begrenzt werden, so dass er nur über einen bestimmten Betrag oder Zustellweg aus der Ultraschallsonotrode ausgefahren werden kann.

Dabei führt der Anschluss zu einer Fluidquelle und/oder einem Drucksensor, insbesondere mit einem Druckregler. Auf diese Weise kann nicht nur der Stempel von der Ruhelage in die Arbeitslage und zurück verfahren, sondern auch die gewünschte Haltekraft aufgebracht und sogar konstant gehalten werden, und zwar unabhängig von der Position des Stempels in der Ausnehmung.

Dabei ist die Haltekraft so gewählt, dass sie kleiner ist, als die Zustellkraft der Ultraschallsonotrode. Wird die Ultraschallsonotrode auf das Werkstück aufgesetzt, liegt zunächst der Stempel am Werkstück an und dient als Niederhalter für das Werkstück und wird dann mit weiterer Zustellung der Ultraschallsonotrode in Richtung des Werkstücks in die Ultraschallsonotrode eingedrückt. Dabei bleibt die Haltekraft konstant. Sobald die Sonotrode am Werkstück anliegt, kann die Haltekraft auf Null reduziert beziehungsweise der Stempel vollständig in die Sonotrode eingezogen werden.

Es besteht aber auch die Möglichkeit, dass während oder nach der Bearbeitung des Werkstücks mittels der Ultraschallsonotrode der Stempel wieder ausgefahren wird und dabei einen Stanzvorgang ausführt. Der Stempel ist dann nicht nur ein Niederhalter, sondern auch gleichzeitig ein Stanzwerkzeug.

Bevorzugt kann die Kontaktfläche des Stempels auch strukturiert sein, so dass das Werkstück mit Sicherheit gehalten wird. Für den Stempel können beliebige Materialien gewählt werden, wie Metall, Kunststoff oder Keramik sowie Kombinationen hiervon.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist.

In der Zeichnung zeigen:
- Figur 1: einen Längsschnitt durch die erfindungsgemäße Vorrichtung vor dem Aufsetzen auf ein Werkstück;
- Figur 2: die Vorrichtung gemäß Figur 1 beim Aufsetzen auf das Werkstück; und
- Figur 3: die Vorrichtung gemäß Figur 1 beim Bearbeiten des Werkstücks.

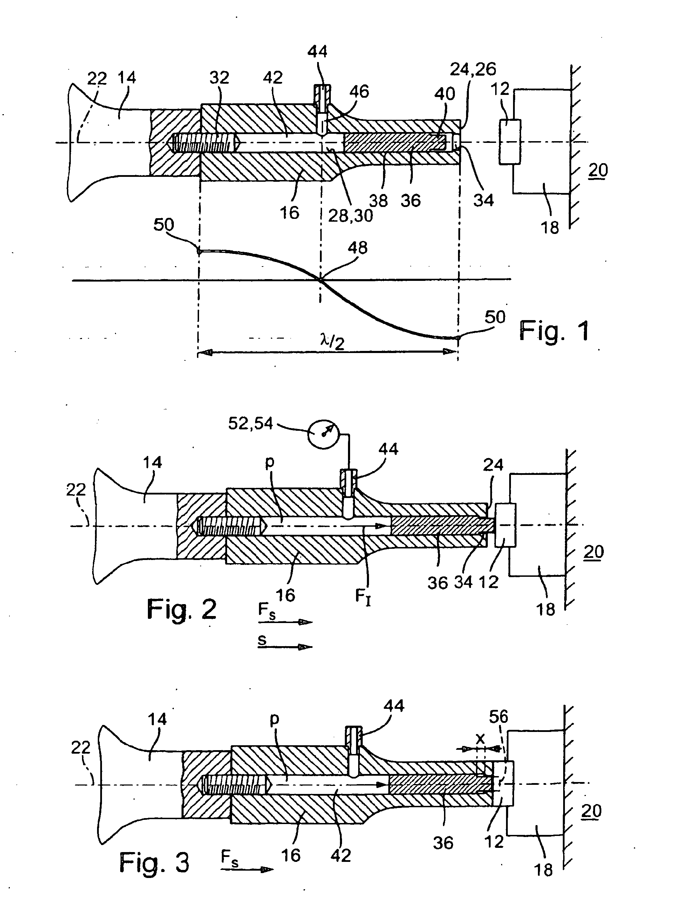

Die Figur 1 zeigt eine insgesamt mit 10 bezeichnete Vorrichtung zum Bearbeiten eines Werkstücks 12, wobei ein Booster oder Konverter 14, eine Ultraschallsonotrode 16 und ein Amboss 18, der an einem nur angedeuteten Maschinengestell 20 fixiert ist, erkennbar sind. Der Booster 14, die Ultraschallsonotrode 16, das Werkstück 12 und der Amboss 18 liegen auf einer Achse 22, insbesondere der Längsachse der Ultraschallsonotrode 16, die auch die Bearbeitungsrichtung darstellt. Die Ultraschallsonotrode 16 besitzt eine Stirnseite 24, die die Bearbeitungsfläche oder Schweißfläche 26 darstellt. Sie zeigt in Richtung auf das Werkstück 12.

Die Ultraschallsonotrode 16 besitzt eine insgesamt mit 28 bezeichnete Ausnehmung, die zum Beispiel als Bohrung 30 mit einem kreisrunden Querschnitt ausgeführt ist. Die Ausnehmung 28 ist an der Stirnseite 24 randoffen, das heißt sie mündet ins Freie, wohingegen auf der gegenüberliegenden Seite ein Schraubbolzen 32 eingeschraubt ist, an welchem wiederum der Booster 14 befestigt ist.

Die Ausnehmung 28 erstreckt sich ebenfalls in Richtung der Achse 22 und liegt koaxial zu dieser. Außerdem ist die Ausnehmung 28 als Stufenbohrung ausgebildet und besitzt im Bereich der Stirnseite 24 eine Einschnürung 34. Ferner ist in der Ausnehmung 28 ein Stempel 36 in Richtung der Achse 22 verschieblich gelagert, wobei der Stempel 36 in der in der Figur 1 dargestellten Stellung seine Ruhelage einnimmt. Dabei kann der den Stempel 36 aufnehmende Bereich 38 der Ausnehmung 28 einen kreisrunden oder einen polygonen Querschnitt aufweisen. Weiterhin ist erkennbar, dass der Stempel 36 ein verjüngtes Ende 40 aufweist, welches so bemessen ist, dass es die Einschnürung 34 durchgreifen und aus der Ultraschallsonotrode 16 heraustreten kann, was in der Figur 2 dargestellt ist. Dabei dient die Verjüngung 34 als Endanschlag für den Stempel 36, der dann, wie in der Figur 2 dargestellt, seine Arbeitsposition einnimmt.

Auf der gegenüberliegenden Seite des Stempels 36 befindet sich ein Druckraum 42, der mit einem Anschluss 44 versehen ist, der über eine Querbohrung 46 in den Druckraum 42 mündet. Der Anschluss 44 liegt im Schwingungsknoten 48 der Ultraschallsonotrode 16, wobei diese an der Stirnseite 24 sowie an der gegenüberliegenden Anschlussseite für den Booster 14 jeweils einen Schwingungsbauch 50 aufweist. Dies ist deutlich aus dem unterhalb des Querschnitts gezeigten Schaubilds einer Halbwelle von λ/2 erkennbar.

Über den Anschluss 44 kann ein Druckmedium, zum Beispiel ein Fluid, was eine Flüssigkeit oder ein Gas sein kann, in den Druckraum 42 eingeleitet werden, wodurch der Stempel 36 in Richtung auf das Werkstück 12 und teilweise aus der Ultraschallsonotrode 16 herausbewegt wird. Dies ist in der Figur 2 dargestellt. Anschließend wird die Ultraschallsonotrode 16 zusammen mit dem Booster 14 in Richtung des Verfahrweges S bewegt, bis das Ende 40 des Stempels 36 am Werkstück 12 anliegt. Im Druckraum 42 herrscht ein konstanter Druck, der mittels eines Drucksensors 52, der ebenfalls am Anschluss 44 angeschlossen ist, erfasst wird. Das Werkstück 12 wird vom Ende 40 des Stempels 36 festgehalten, wobei der Stempel 36 als Niederhalter dient.

Sodann wird die Ultraschallsonotrode 16 weiter um die Wegstrecke X in Richtung auf das Werkstück 12 bewegt, bis die Stirnseite 24 an der Oberfläche des Werkstücks 12 anliegt, was in der Figur 3 dargestellt ist. Dabei wird der Stempel 36 in die Ausnehmung 28 entgegen der Haltekraft F_{I} zurückgeschoben, da die Zustellkraft F_{S} der Sonotrode 16 größer ist. Das Werkstück 12 wird jedoch aufgrund des im Druckraum 42 herrschenden Drucks P festgehalten. Dieser Druck P bleibt konstant, auch wenn der Stempel 36 in die Ausnehmung 28 zurückgeschoben wird, was dadurch bewirkt wird, dass der Drucksensor 52 an einen Druckregler 54 angeschlossen ist, der den Druck P konstant hält.

Sobald die Stirnseite 24 auf dem Werkstück 12 aufsitzt, wird dieses bearbeitet. Der vom Ende 40 des Stempels 36 abgedeckte Bereich des Werkstücks 12 wird nicht bearbeitet, da der Stempel 36 den Ultraschallschwingungen der Ultraschallsonotrode 16 nicht folgt. Dieser Bereich ist am Werkstück 12 mit 56 bezeichnet.

Der Stempel 36 dient also zur Fixierung des Werkstücks 12 sowie zur Dämpfung von Ultraschallschwingungen im Bereich 56 auf dem Werkstück 12. Dabei kann der Stempel 36 auch als Stanzwerkzeug ausgebildet sein, so dass vor oder nach der Ultraschallbearbeitung das Werkstück 12 mittels des Stempels 36 gestanzt wird, indem im Druckraum 42 der Druck P erhöht wird. Der Stempel 36 ist spielfrei in der Ausnehmung 28 und insbesondere fluiddicht in dieser verschieblich gelagert.

## Patentansprüche

1. Vorrichtung (10) zum Bearbeiten von Werkstücken (12) mittels Ultraschall, mit einer Ultraschallsonotrode (16) und einem Amboss (18), wobei zwischen der Ultraschallsonotrode (16) und dem Amboss (18) ein Werkstück (12) bearbeitet wird, und wobei die Ultraschallsonotrode (16) in Achsrichtung (22) und in Richtung auf das Werkstück (12) eine randoffene Ausnehmung (28) aufweist, in welcher ein Stempel (36) angeordnet ist, der zwischen einer in die Ultraschallsonotrode (16) eingefahrenen Ruhelage und einer teilweise aus der Ultraschallsonotrode (16) herausragenden Arbeitslage verfahrbar ist, **dadurch gekennzeichnet, dass** der Stempel (36) spielfrei oder nahezu spielfrei in der Ausnehmung (28) geführt und fluiddicht, insbesondere pneumatisch dicht, in der Ausnehmung (28) gelagert ist, dass die Ausnehmung (28) einen Druckraum (42) bildet und einen Anschluss (44) für ein Fluid aufweist, dass der Anschluss (44) in einem Schwingungsknoten (48) liegt und dass die Zustellkraft (F_{S}) der Ultraschallsonotrode (16) größer ist als die Kraft (F_{I}), mit der der Stempel (36) aus der Ausnehmung (28) gedrückt wird, so dass der Stempel (36) nach dem Aufsetzen auf das Werkstück (12) und weiterem Zustellen der Ultraschallsonotrode (16) in Richtung des Werkstücks (12) von der Arbeitslage in die Ultraschallsonotrode (16) eingedrückt wird.

2. Vorrichtung nach Anspruch 1, **dadurch gekennzeichnet, dass** die Ausnehmung (28) eine Bohrung, insbesondere eine Stufenbohrung ist.

3. Vorrichtung nach Anspruch 1 oder 2, **dadurch gekennzeichnet, dass** der Stempel (36) einen den Verschiebeweg begrenzenden Anschlag aufweist.

4. Vorrichtung nach einem der vorhergehenden Ansprüche, **dadurch gekennzeichnet, dass** die Ausnehmung (28) einen kreisrunden oder einen polygonalen Querschnitt aufweist.

5. Vorrichtung nach einem der vorhergehenden Ansprüche, **dadurch gekennzeichnet, dass** der Anschluss (44) zu einer Fluidquelle und/oder einem Drucksensor (52) führt.

6. Vorrichtung nach Anspruch 5, **dadurch gekennzeichnet, dass** der Drucksensor (52) mit einem Druckregler (54) verbunden ist.

7. Vorrichtung nach einem der vorhergehenden Ansprüche, **dadurch gekennzeichnet, dass** die das Werkstück (12) kontaktierende Fläche des Stempels (36) strukturiert ist.

8. Vorrichtung nach einem der vorhergehenden Ansprüche, **dadurch gekennzeichnet, dass** der Stempel (36) als Stanzwerkzeug ausgebildet ist.

## Claims

1. Device (10) for machining workpieces (12) using ultrasound, having an ultrasonic sonotrode (16) and an anvil (18), a workpiece (12) being machined between the ultrasonic sonotrode (16) and the anvil (18), and the ultrasonic sonotrode (16) having, in the axial direction (22) and in the direction pointing towards the workpiece (12), an opening (28) opening onto its edge in which there is arranged a plunger (36) which is displaceable between a rest position in which it is withdrawn into the ultrasonic sonotrode (16) and a working position in which it partly projects from the ultrasonic sonotrode (16), **characterised in that** the plunger (36) is guided in the opening (28) with no play or almost no play and is mounted in the opening (28) in a fluid-tight, and in particular pneumatically fluid-tight, manner, **in that** the opening (28) forms a chamber for pressure (42) and has a connection (44) for a fluid, **in that** the connection (44) is situated on a node of vibration (48), and **in that** the infeed force (F_{S}) on the ultrasonic sonotrode (16) is greater than the force (F_{I}) with which the plunger (36) is pressed out of the opening (28), the plunger (36) thus being pressed into the ultrasonic sonotrode (16) from the working position on being applied to the workpiece (12) and on the ultrasonic sonotrode (16) continuing to be fed in towards the workpiece (12).

2. Device according to claim 1, **characterised in that** the opening (28) is a bore, and in particular a stepped bore.

3. Device according to claim 1 or 2, **characterised in that** the plunger (36) has a stop which limits its travel in displacement.

4. Device according to one of the preceding claims, **characterised in that** the opening (28) is of circular or polygonal cross-section.

5. Device according to one of the preceding claims, **characterised in that** the connection (44) runs to a fluid source and/or a pressure sensor (52).

6. Device according to claim 5, **characterised in that** the pressure sensor (52) is connected to a pressure regulator (54).

7. Device according to one of the preceding claims, **characterised in that** that face of the plunger (36) which makes contact with the workpiece (12) is structured.

8. Device according to one of the preceding claims, **characterised in that** the plunger (36) takes the form of a stamping, punching or die-cutting tool.

## Revendications

1. Dispositif (10) pour travailler des pièces à usiner (12) à l'aide d'ultrasons, muni d'une sonotrode à ultrasons (16) et d'une enclume (18), de telle sorte qu'une pièce à usiner (12) va être travaillée entre la sonotrode à ultrasons (16) et l'enclume (18), et de telle sorte que la sonotrode à ultrasons (16) présente un évidement à bord ouvert (28) dans une direction axiale (22) et dans une direction vers la pièce à usiner (12), dans lequel est agencé un poinçon (36), qui peut être déplacé entre une position de repos rentrée dans la sonotrode à ultrasons (16) et une position de travail partiellement en saillie de la sonotrode à ultrasons (16), **caractérisé en ce que** le poinçon (36) est guidé sans jeu, ou pratiquement sans jeu, dans l'évidement (28) et est reçu de manière étanche aux fluides, en particulier étanchéifié de manière pneumatique, dans l'évidement (28), **en ce que** l'évidement (28) forme un espace de pression (42), et présente un accès (44) pour un fluide, **en ce que** l'accès (44) s'étend dans un noeud de vibrations (48), et **en ce que** la force de positionnement (Fs) de la sonotrode à ultrasons (16) est supérieure à la force (F₁) à l'aide de laquelle le poinçon (36) va être poussé hors de l'évidement (28), de sorte que le poinçon (36), après la mise en place contre la pièce à usiner (12), et le nouveau positionnement de la sonotrode à ultrasons (16) dans la direction de la pièce à usiner (12), va être enfoncé depuis la position de travail dans la sonotrode à ultrasons (16).

2. Dispositif selon la revendication 1, **caractérisé en ce que** l'évidement (28) est un alésage, en particuliers un alésage étagé.

3. Dispositif selon la revendication 1 ou 2, **caractérisé en ce que** le poinçon (36) présente une butée limitant une course de déplacement.

4. Dispositif selon l'une quelconque des revendications précédentes, **caractérisé en ce que** l'évidement (28) présente une coupe transversale ronde ou polygonale.

5. Dispositif selon l'une quelconque des revendications précédentes, **caractérisé en ce que** l'accès(44) conduit à une source de fluide ou à un capteur de pression (52).

6. Dispositif selon la revendication 5, **caractérisé en ce que** le capteur de pression (52) est relié à un régulateur de pression (54).

7. Dispositif selon l'une quelconque des revendications précédentes, **caractérisé en ce que** la surface du poinçon (36) en contact avec la pièce à usiner (12) est structurée.

8. Dispositif selon l'une quelconque des revendications précédentes, **caractérisé en ce que** le poinçon (36) est réalisé sous la forme d'une matrice d'estampage.
